# EUROPEAN PATENT SPECIFICATION

(11) **EP 2 985 478 B1**
(45) Date of publication and mention of the grant of the patent: **06.03.2019**
(21) Application number: 14180926.9
(22) Date of filing: 14.08.2014
(51) Int. Cl.: F16B 31/04, F16B 31/06

(54) **Method for connecting two members**
Methode zum Verbinden von zwei Elementen
Procédé de raccordement de deux éléments

(43) Date of publication of application: 17.02.2016
(73) Proprietor: Caterpillar Energy Solutions GmbH, 68167 Mannheim (DE)
(72) Inventor: Guisasola, Íñigo, 76829 Landau in der Pfalz (DE)
(74) Representative: BRP Renaud & Partner mbB Rechtsanwälte Patentanwälte Steuerberater

(56) References cited:
- WO-A2-2005/045262
- JP-A- H11 280 752
- JP-A- 2010 071 438

## Description

### Technical Field

The present disclosure generally relates to a method for connecting two members to one another, particularly via at least one screw. The present disclosure further relates to a screw connection and, specifically, to a connecting rod assembly and a crankshaft assembly.

### Background

When mounting, for example, a connecting rod cap to a connecting rod about a crankshaft of an internal combustion engine, it is known to attach the connecting rod cap to the connecting rod via at least one screw. It is also known to mold the connecting rod cap and the connecting rod as a single piece and, then, to crack the single piece into the connecting rod cap and the connecting rod, thereby forming unique flange faces perfectly engaging each other.

However, in some prior art manufacturing methods, it is known to provide the connecting rod cap and the connecting rod each with machined flange faces. However, when fixing both pieces together via, for example, screws, the pressure at the flange faces may be non-uniformly. Particularly, the pressure at the flange faces may decrease in relation to the distance to the screw. This may lead to a relative movement between the connecting rod and the connecting rod cap, which relative movements may cause fretting corrosion or the creation of cracks.

For example, WO 2005/045262 A2 discloses fastener joints. The fastener joints induce static pre-stresses into a fastener that clamps the joint in a magnitude equal and direction opposite from bending stresses induced in the fastener by application loading. Such joints include angling the bolts seats of a connecting rod bearing cap inwardly, creating a relief at the bolted interface between the cap and the rod adjacent to the main bore of the connecting rod or skewing the threaded holes in the rod body inwardly as they extend from the bolted joint faces. Similar systems are also known from JP 2010 071438 A and JP H11 280752 A.

The present disclosure is directed, at least in part, to improving or overcoming one or more aspects of prior systems.

### Summary of the Disclosure

According to an aspect of the present disclosure, a method for mounting a first member having a first flange face to a second member having a second flange face via at least one mounting screw is disclosed. The disclosed method comprises at least partially elastically deforming the first member at the first flange face, machining the first flange face while maintaining the first member at least partially elastically deformed, after machining the first flange face of the first member, relaxing the first member, and mounting the first member to the second member via the at least one mounting screw by tightening the at least one mounting screw, preferably with a predetermined torque.

According to another aspect of the present disclosure, a screw connection for connecting a first member to a second member via at least one mounting screw is disclosed. The screw connection comprises a first member having at least one first flange face and a second member having at least one second flange face. The screw connection further comprises at least one mounting screw configured to mount the first member to the second member at the first and second flange faces. At least one of the first and second flange faces includes an at least partially concave shape in a non-tightened state of the at least one mounting screw, and a substantially planar shape in a thightened state of the at least one mounting screw.

In some embodiments, the step of at least partially elastically deforming the first member may include at least partially elastically deforming the first flange face to an at least partially convex shape. In some embodiments, the step of machining the first flange face may include substantially flattening the first flange face.

Within the meaning of the present disclosure, the terms "amount of convexity" and "amount of concavity" define the maximum distance from the apex and the nadir of the respective convex and concave surfaces to the original planar surfaces, respectively.

Within the meaning of the present disclosure, the method step of machining the first flange face may include introducing a defined surface shape having peaks and valleys into the first flange face. In such case, the peak ends each substantially may lie in a single plane and the valley bottoms also each substantially may lie in a sinlge plane, such that the first flange face can be referred to as a substantially planar flange face. For instance, the defined surface shape introduced into the first and/or second flange face may be referred to as a serration.

Moreover, at least one of the first and second member may have an at least partially concave shape after having tightened the at least one mounting screw. In such case, the amount of concavity of the flange face after tightening the at least one mounting screw may be smaller than the amount concavity of the flange face prior tightening.

Other features and aspects of this disclosure will be apparent from the following description and the accompanying drawings.

### Brief Description of the Drawings

Fig. 1 shows a top view of a connecting rod assembly having a connecting rod and a connecting rod cap connected to each other via screws;
Fig. 2 shows a sectional view through a connecting rod and a connecting rod cap;
Fig. 3 shows the sectional view of Fig. 2 with a pre-stressing screw inserted into a tapped blind hole bore of the connecting rod in a non-tightened state;
Fig. 4 shows the sectional view of Fig. 3 with the pre-stressing screw tightened with a predetermined torque;
Fig. 5 shows the sectional view of Fig. 4 after machining a flange face of the connecting rod while maintaining the pre-stressing screw in the tightened state;
Fig. 6 shows the sectional view of Fig. 5 with the pre-stressing screw removed from the blind hole of the connecting rod;
Fig. 7 shows the sectional view of Fig. 6 with flange faces of the connecting rod and the connecting rod cap contacting each other and a mounting screw inserted through a through hole in the connecting rod cap and engaging the blind hole of the connecting rod in a non-tightened state;
Fig. 8 shows the sectional view of Fig. 7 with the mounting screw tightened with a predetermined torque;
Fig. 9 shows a sectional view of conventional crankshaft assembly including a crankshaft and a damping element connected to an end face of the crankshaft via at least one screw;
Fig. 10 shows a sectional view of an apparatus for preforming the damping element inserted therein;
Fig. 11 shows the sectional view of Fig. 10 with the damping element at least partially elastically deformed by the apparatus of Fig. 10 before machining the same;
Fig. 12 shows the sectional view of Fig. 11 with the damping element machined while maintaining the damping element at least partially elastically deformed;
Fig. 13 shows the sectional view of Fig. 12 with the damping element in a relaxed state;
Fig. 14 shows the a sectional view of an exemplary crankshaft assembly having a preformed damping element pre-assembled to the crankshaft via at least one mounting screw before tightening the mounting screw; and
Fig. 15 shows a sectional view of the crankshaft assembly of Fig. 14 with the damping element connected to the crankshaft after tightening the at least one mounting screw with a predetermined torque.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that machining a mounting member while maintaining the mounting member at least partially elastically deformed may lead to a flange face of the mounting member that is at least partially non-planar. After mounting the mounting member to another member and tightening the at least one mounting screw, for example, with a predetermined torque or force, the flange face may then be in areal contact with a corresponding flange face of the other member. Such areal contact may lead to a more uniform pressure distribution at the flange faces.

The present disclosure may be further based at least in part on the realization that machining at least one flange face of a connecting rod and a connecting rod cap of a connecting rod assembly of an internal combustion engine while maintaining the flange face at least partially elastically deformed may lead to less relative movement between the flange face during operation of the internal combustion engine. Especially, due to alternating loads or vibrations during operation of the internal combustion engine, such relative movements at the joint surfaces of the connecting rod assembly may lead to material failure and to cracks of the connecting rod assembly.

In the following, the screw connection and method for connecting a first member to a second member via at least one screw according to the present disclosure is exemplary disclosed with respect to a connecting rod assembly and a crankschaft assembly. However, it is contemplated that the disclosed method and the connecting rod and crankshaft shaft assemblies may be also applied to each assembly where a first member may be connected to a second member via at least one mounting screw.

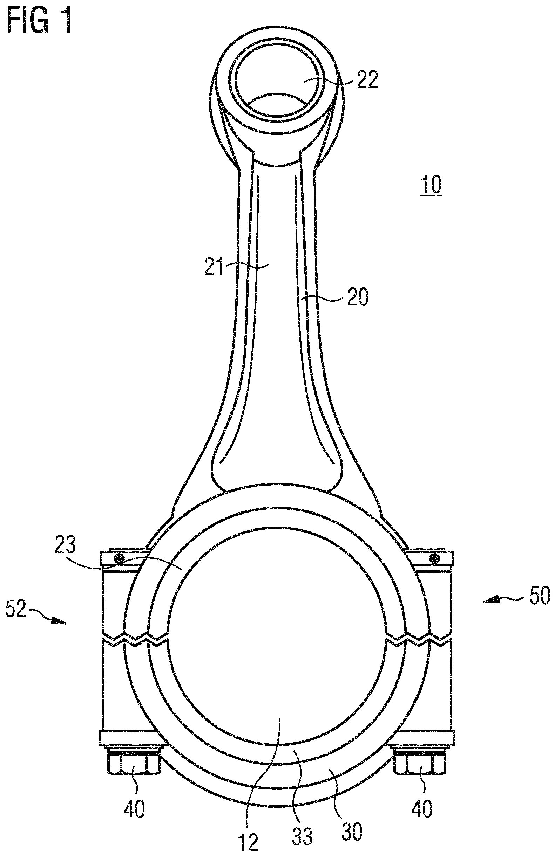

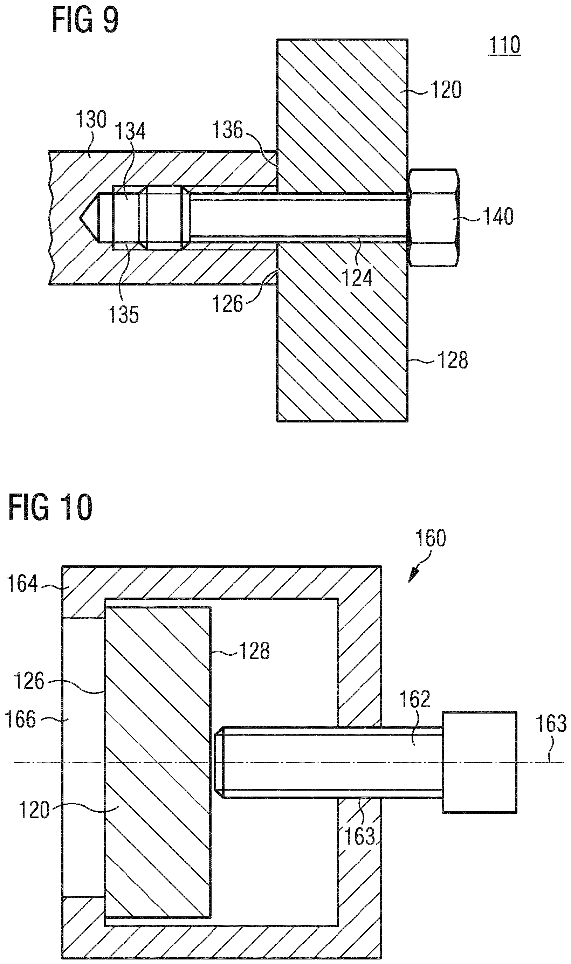

Figs. 1 to 8 show an exemplary method and apparatus according to the present disclosure in an example of connecting a connecting rod cap to a connecting rod of a connecting rod assembly configured to be mounted to a crankshaft of an internal combustion engine. Figs. 9 to 15 illustrate an exemplary method and apparatus according to the present disclosure in an example of connecting a damping element to a crankshaft of an internal combustion engine.

Referring to Fig. 1, a top view of an exemplary connecting rod assembly 10 is illustrated. The connecting rod assembly 10 includes a connecting rod 20 and a connecting rod cap 30 mounted to the connecting rod 20 via two mounting screws 40. The connecting rod 20 includes a connecting rod shaft 21 extending between a connecting rod small end 22 configured to connect to a piston bolt of a piston (not shown in the drawings), and a connecting rod big end 12 connecting to a crankshaft (not shown in the drawings) of an internal combustion engine. The connecting rod 20 forms at least a portion of the connecting rod big end 12 and includes a big end bearing shell 23. The connecting rod cap 30 is mounted to the connecting rod 20 via the two mounting screws 40 at a first mounting portion 50 and a second mounting portion 52 opposite to the first mounting portion 50. The connecting rod cap 30 forming at least a portion of the connecting rod big end 12 also includes a big end bearing shell 33 which circumferentially extends about a corresponding crankshaft portion for mounting the connecting rod assembly 10 to the crankshaft.

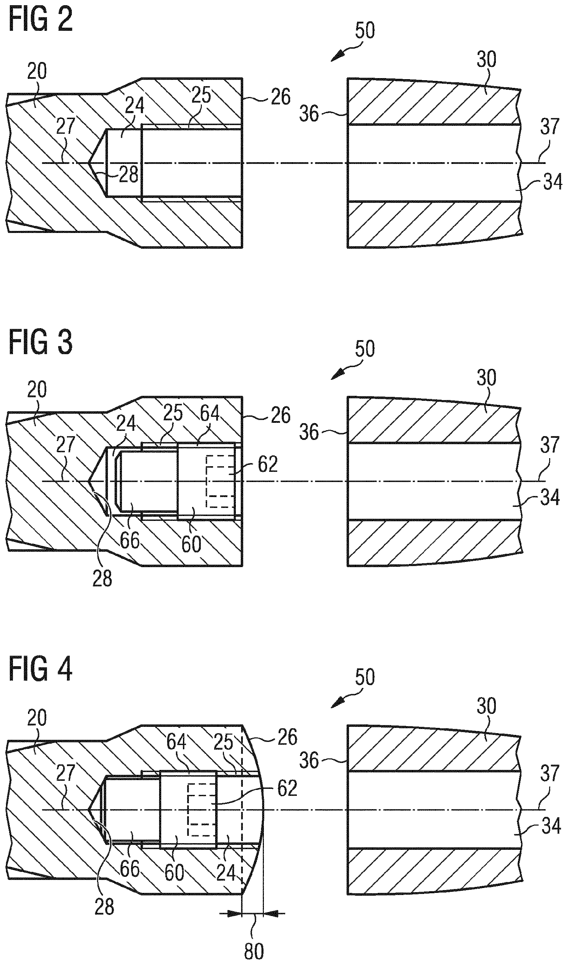

Fig. 2 illustrates a sectional view through the connecting rod 20 and the connecting rod cap 30 at the first mounting portion 50 prior to preforming the connecting rod 20 and assembling the connecting rod 20 and the connecting rod cap 30 to one another. The connecting rod 20 includes a tapped blind hole 24 extending from a first flange face 26 of the connecting rod 20 along a first longitudinal axis 27. The blind hole 24 is provided with a thread 25 starting from the first flange face 26. The thread 25 may be of a metric type. In some embodiments, the thread 25 may be any other thread type known in the art, such as, for example, a fine thread, a rolled thread, and a cutted thread.

The blind hole 24 has a bottom portion 28. The shape of the bottom portion 28 corresponds to the shape of a drilling bit with which the blind hole 24 is manufactured. The length of the blind hole 24 is substantially greater than the length of the thread 25.

As further shown in Fig. 2, the connecting rod cap 30 includes a through hole 34 extending from a second flange face 36 of the connecting rod cap 30 along a second longitudinal axis 37. The through hole 34 extends through the entire mounting portion 50 of the connecting rod cap 30 (see Fig. 1). In Fig. 2, the first and second flange faces 26, 36 have a substantially planar shape.

As indicated in Fig. 1, the connecting rod 20 and the connecting rod cap 30 each have preset flange faces 26, 36 with peaks and valleys engaging each other when being assembled together. Hence, the first and second flange faces 26, 36 may be referred to as a connecting rod serration. In the original state, the peaks projecting from the first and second flange faces 26, 36 may have a substantially uniform height, such that the peak ends lie in a single plane and the first and second flange faces 26, 36 may be referred to as having a substantially planar shape. In some embodiments, the first and second flange faces 26, 36 may have a surface shape being flat and planar.

As the sectional views of Figs. 2 to 8 are taken along a direction along which the peaks and valleys of the first and second flange faces 26, 36 extend (see Fig. 1), such peaks and valleys are not visible in Figs. 2 to 8.

When mounting the connecting rod 20 to the connecting rod cap 30, the first and second longitudinal axes 27, 37 are aligned to one another (as shown in Figs. 2 to 8), such that the first flange face 26 of the connecting rod 20 may be in areal contact with the flange face 36 of the connecting rod cap 30.

Referring to Fig. 3, the sectional view of Fig. 2 is shown with a pre-stressing screw 60 threadably inserted into the thread 25 of the blind hole 24. In Fig. 3, the pre-stressing screw 60 is threadably inserted into the thread 25, but is still freely rotatable, which means that no torque is applied to the pre-stressing screw 60 in Fig. 3. In the example shown in Fig. 3, the pre-stressing screw 60 is a headless screw provided with a hexagon socket 62, a threaded portion 64, and a shaft portion 66 opposite to the hexagon socket 62. The shaft portion 66 does not include a thread. As shown in Fig. 3, the diameter of the shaft portion 66 is smaller than the diameter of the blind hole 24. The shaft portion 66 is configured to project from the threaded portion 64 towards the bottom portion 28 of the blind hole 24.

The pre-stressing screw 60 is generally configured to at least partially elastically deform the first flange face 26. The pre-stressing screw 60 is further configured to maintain the first flange face 26 at least partially elastically deformed during the process of machining the first flange face, which will be described below in greater detail.

With respect to Fig. 4, the sectional view of Fig. 3 is shown with the pre-stressing screw 60 tightened with a predetermined pre-stressing torque. In some embodiments, the pre-stressing screw 60 may be tightened with a predetermed rotation angle using, for example, hydraulic forces.

In Fig. 4, during tightening the pre-stressing screw 60, an end face of the shaft portion 66 of the pre-stressing screw 60 contacts the bottom portion 28 of the blind hole 24. When further tightening the pre-stressing screw 60, the pre-stressing screw 60 threadably engaging the thread 25 of the blind hole 24 exerts an axial force onto the thread flanks of the thread 25. Such axial force at least partially elastically deforms the connecting rod 20. The at least partially elastically deformation results in that the first flange face 26 may also elastically deform into a convex shape. When tightening the pre-stressing screw 60 with the predetermined pre-stressing torque, the first flange face 26 may have a predetermined convex shape. The predetermined convex shape of the first flange face 26 may have its apex in the vicinity of the first longitudinal axis 27 of the blind hole 24.

In Fig. 4, a dotted line illustrates the original planar shape of the flange face 26, whereas reference numeral 80 denotes the axial distance from the apex of the convex first flange face 26 after elastic deformation to the planar first flange face 26 before elastic deformation. As indicated in Fig. 4, the greater the radial distance from the first longitudinal axis 27, the smaller the amount of convexity 80.

The amount of convexity 80 may range from about 0.01 mm to about 0.5 mm. In some embodiments, the amount of convexity 80 may range from about 0.01 % to about 1 % of the diameter of the blind hole 24. The amount of convexity 80 may be defined by the distance from the apex of the convex flange face 26 to the original planar flange face 26.

Although Figs. 3 and 4 depicts the pre-stressing screw 60 as a headless screw, it is contemplated that the pre-stressing screw 60may be any other kind of screw capable of engaging and pressing against the bottom portion 28 of the blind hole 24. In some embodiments, for example, the pre-stressing screw 60 may be a known outside hexagon socket screw. In such embodiments, the threaded portion 64 of such outside hexagon socket screw has a predetermined length, such that the screw head does not contact and abut the first flange face 26 of the connecting rod 20, when the outside hexagon socket screw contacts the bottom portion 28 of the blind hole 24 and is tightened to the pre-stressing torque for at least partially elastically deforming the connecting rod 20.

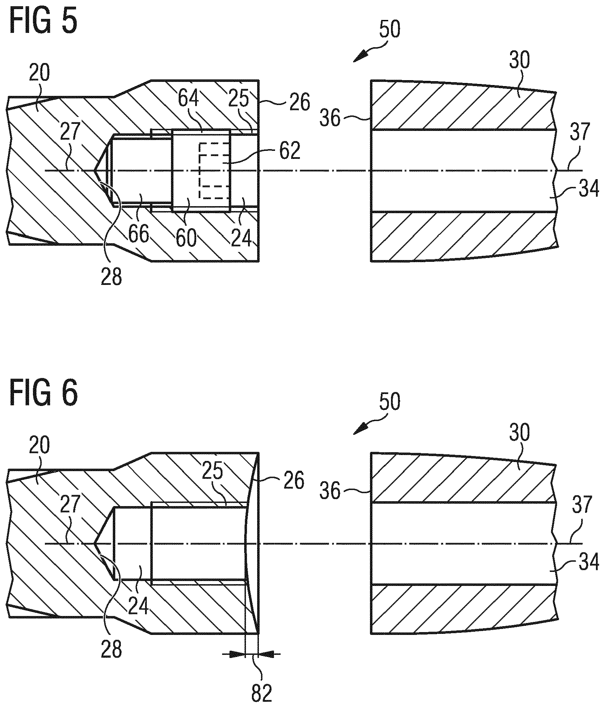

After having tightened the pre-stressing screw 60 with the predetermined pre-stressing torque for at least partially elastically deforming the connecting rod 20, the convex flange face 26 is machined for flattening the same. Fig. 5 shows the sectional view of Fig. 4 after having machined the first flange face 26. For example, the machining process of the convex flange face 26 may be performed by at least one of milling, grinding, honing, lapping, and facing off. The machining process is performed while the connecting rod 20, particularly the first flange face 26, is elastically deformed.

The machining process may also include introducing a defined surface shape having peaks and valleys into the first flange face 26. The peaks and valleys of the first flange face 26 are configured to engage corresponding peaks and valleys at the second flange face 36, respectively.

After having machined and flattened the convex flange face 26, the pre-stressing screw 60 is removed from the blind hole 24, thereby relaxing the connecting rod 20 to a relaxed and non-stressed state. In this state, which is shown in Fig. 6, the first flange face 26 has a concave shape with its nadir in the vicinity of the first longitudinal axis 27. In Fig. 6, reference numeral 82 denotes the distance from the nadir of the concave flange face 26 to the original relaxed plane first flange face 26. As indicated in Fig. 6, the greater the radial distance from the first longitudinal axis 27, the smaller the amount of concavity 82.

The amount of concavity 82 may range from about 0.01 mm to about 0.5 mm. In some embodiments, the amount of concavity 82 may range from about 0.01 % to about 1 % of the diameter of the blind hole 24. The amount of concavity 82 may be defined by the distance from the nadir of the concave first flange face 26 to the original planar first flange face 26.

As already described above, the flange face 26 may have peaks and valleys. When being elastically deformed, the peak ends of the first flange face 26 may lie on an area that is substantially convex. Similarly, when being relaxed, the peak ends of the machined first flange face 26 may lie on an area that is substantially planar or slightly concave.

In some embodiments, the amount of convexity 80 of the convex flange face 26 before machining may be substantially equal to the amount of concavity 82 of the concave flange face 26 after machining. That is, the distance from the apex of the convex surface 26 to the original planar first flange face 26 is substantially equal to the distance from the nadir of the concave flange face 26 to the original planar first flange face 26.

After removing the pre-stressing screw 60 from the blind hole 24 and relaxing the connecting rod 20, thereby providing the concave flange face 26, preforming of the connecting rod 20 is finished. It is contemplated that the method explained with respect to Figs. 2 to 6 may also apply to each further mounting portion 50 where a screw attaches one member to another member. For example, with reference to Fig. 1, the connecting rod cap 30 is mounted to the connecting rod 20 via two mounting screws 40. Thus, the preforming method of the connecting rod 20 at the first mounting portion 50 may be also applied to the connecting rod 20 at the second mounting portion 52.

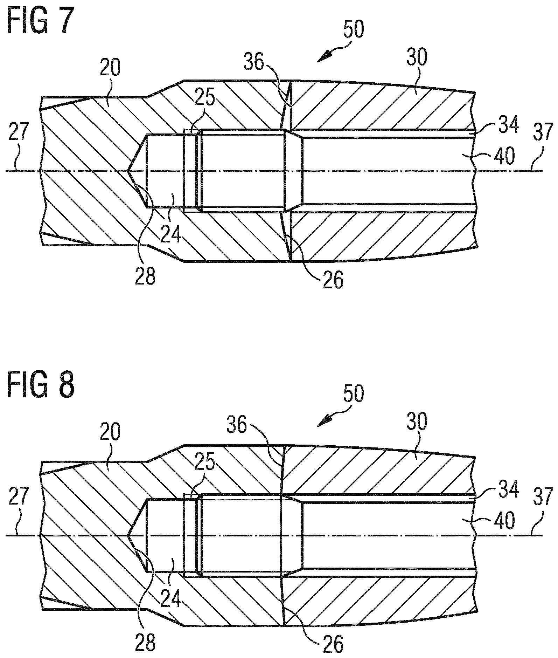

Referring to Fig. 7, after pre-forming the connecting rod 20, the connecting rod cap 30 is mounted to the connecting rod 20 via the mounting screws 40. In Fig. 7, the first and second flange faces 26, 36 face each other, such that the first longitudinal axis 27 is aligned with the second longitudinal axis 37. Then, the mounting screw 40 is inserted through the through hole 34 and threadably engaged with the thread 25 of the blind hole 24. In the position of Fig. 7, the mounting screw 40 is in a non-tightened state.

While tightening the mounting screw 40, the amount of concavity 82 of the first flange face 26 gets continually smaller. When tightening the mounting screw 40 with the predetermined and desired mounting torque, the first flange face 26 is in a substantially areal contact with the second flange face 36, which is illustrated in Fig. 8. In some embodiments, the mounting screw 40 may be tightened to a predetermine rotation angle using, for example, hydraulic forces.

As indicated in Fig. 8, the first flange face 26 may still have a small amount of concavity, while the second flange face 36 may have a small amount of convexity substantially correspoinding to the small amount of concavity of the first flange surface 26. Therefore, the first and second flange faces 26, 36 are in areal contact with each other. When being provided with peaks and valleys (as shown in the drawings), the first and second flange faces 26, 36 may contact each other such that the peaks and valley engage each other, respectively.

In some embodiments, after having the mounting screw 40 tightened, both the first and second flange faces 26, 36 may have a planar shape and may be in areal contact with each other.

For example, the mounting torque of the mounting screws 40 may be substantially equal to the pre-stressing torque of the pre-stressing screw 60. In some embodiments, the mounting torque of the mounting screws 40 may be in a range of about 50% to 200 % of the pre-stressing torque, particularly in a range of about 80 % to about 120 % of the pre-stressing torque.

Although not shown in the drawings, in the case of having a connecting rod cap 30 with a tapped blind hole and a connecting rod with a through hole, the method for preforming the connecting rod 20 explained above may also apply to the connecting rod cap 30. In such embodiments, the connecting rod cap 30, particularly the second flange face 36 may be at least partially elastically deformed, then machined and mounted to the connecting rod 20.

In some embodiments, both the connecting rod 20 and the connecting rod cap 30, particularly both the first and second flange faces 26, 36 may be preformed as mentioned above with respect to Figs. 2 to 8.

Referring to Fig. 8, the pressure at the first and second flange faces 26, 36 is more uniform and does not or not so much decrease or increase in relation to the distance to the screw. This may prevent any relative movement of the connecting rod 20 to the connecting rod cap 30 at the first and second flange faces 26, 36.

In the following, an exemplary method for assembling a crankshaft assembly 110 having a damping element 120 mounted to a crankshaft 130 is shown in Figs. 9 to 15. The damping element 120 may be a torsion damping element including at least one damping device (not explicitly shown in the drawings), such as, for instance, torsion springs or viscous fluid.

Fig. 9 illustrates a conventional crankshaft assembly 110 including a damping element 120 and a crankshaft 130. The damping element 120 is mounted to an end face 136 of the crankshaft 130 via at least one mounting screw 140. In Fig. 9, a flange face 126 of the damping element 120 is planar and abuts the planar flange face 136. The damping element 120 further includes an end face 128 opposite to the flange face 126 and configured to be contacted by a screw head of the mounting screw 140. The at least one screw 140 extends through a through hole 124 of the damping element 120 and engages a tapped blind bore 134 of the crankshaft 130. However, when tightening the at least one mounting screw 140 to a predetermined and desired torque, there may be a non-uniformly distributed pressure distribution at the flange faces 126, 136, which may lead to relative movement of the damping element 120 and the crankshaft 130. This relative movement may cause fretting corrosion and may diminish reliability of the crankshaft assembly 110.

With respect to Figs. 10 to 15, an exemplary method of connecting a damping element 120 to a crankshaft 130 is shown. In the exemplary disclosed embodiment, the damping element 120 is preformed by an apparatus 160.

Referring to Fig. 10, the apparatus 160 for pre-forming the damping element 120 is shown. The damping element 120 is positioned in the apparatus 160, such that the flange face 126 faces to a side opposite to a pre-stressing screw 162 threadably engaging a threaded bore 163 of the apparatus 160. The pre-stressing screw 162 extending along a longitudinal axis 163 is positioned with respect to the damping element 120, such that, when applying torque to the pre-stressing screw 162, the pre-stressing screw 162 contacts central portion of the damping element 120. In some embodiments, the pre-stressing screw 162 may be configured to contact any other portion of the damping flange element 120 for elastically deforming the same.

In some embodiments, instead of providing a pre-stressing screw 162, there may be any device configured to exert an axial force onto the damping element 120. For example, such device may be hydraulically, electrically, or pneumatically actuated.

The apparatus 160 includes a supporting portion 164 configured to support the damping element 120 about its entire circumference at radial outer portions thereof. The apparatus 160 has an opening 166 delimited by the supporting portion 164 and through which the damping flange element 120 may at least partially extend when being elastically deformed, which will be described in detail below.

In Fig. 10, the pre-stressing screw 162 is in a non-tightened state and does not contact the damping element 120. Then, when advancing the pre-stressing screw 162 towards the damping element 120, the pre-stressing screw 162 contacts the central portion of the end face 128 opposite to the flange face 126.

By continually advancing the pre-stressing screw 162, the damping flange element 120 will at least partially elastically deform. Due to the supporting portion 164 and the opening 166, the elastic deformation of the damping element 120 in the central portion is greater than the elastic deformation in the radial outer portions of the damping element 120.

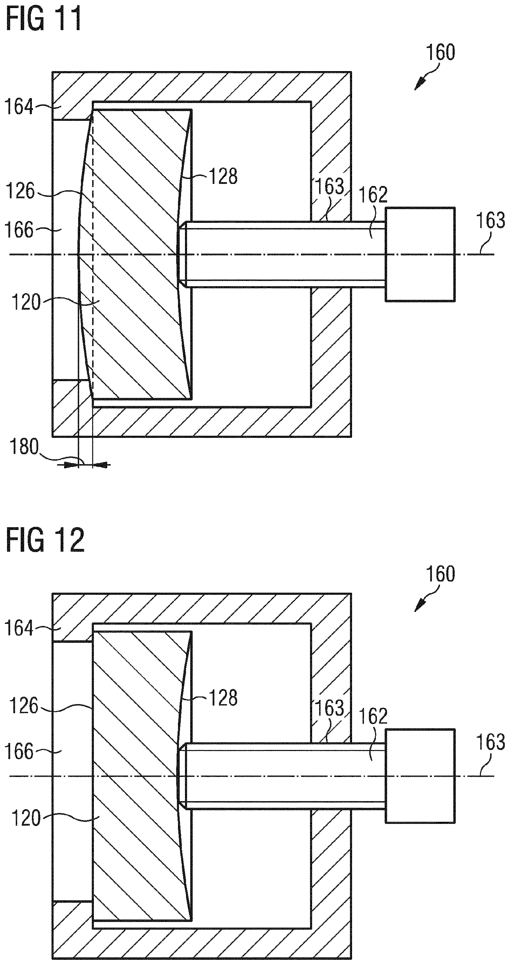

Fig. 11 shows the damping element 120 pre-stressed and elastically deformed to a predetermined shape. As can be seen in Fig. 11, the flange face 126 has a convex shape, while the end face 128 has a concave shape. Specifically, the greater the radial distance from the longitudinal axis 163, the smaller the amount of convexity 180.

The amount of convexity 180 may range from about 0.01 mm to about 0.5 mm. In some embodiments, the amount of convexity 180 may range from about 0.01 % to about 1 % of the diameter of the pre-stressing screw 162. For example, in the exemplary embodiment shown in Fig 11, the amount of convexity 180 may be about 0.33 % of the diameter of the pre-stressing screw 162. The amount of convexity 180 may be defined by the distance from the apex of the convex flange face 126 to the original planar flange face 126.

After elastically deforming the damping element 120, the convex flange face 126 is machined for flattening the same. Fig. 12 shows the apparatus 160 of Fig. 11 after machining the convex flange face 126 to a planar flange face 126. For example, the machining process of the convex flange face 126 may be performed by at least one of milling, grinding, honing, lapping, and facing off. The machining process is performed while the damping element 120, particularly the flange face 126, is elastically deformed.

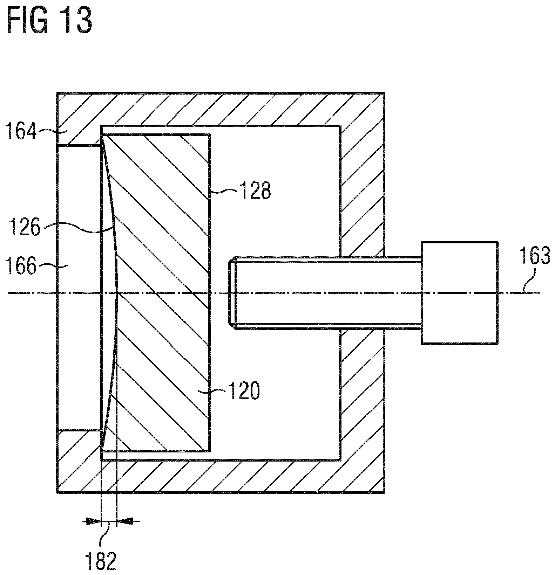

After machining and flattening the convex flange face 126, the pre-stressing screw 162 is removed from the threaded bore 163 of the apparatus 160 thereby relaxing the damping element 120 to a relaxed and non-stressed state. In this state, which is shown in Fig. 13, the flange face 126 has a concave shape with its nadir located in the vicinity of the longitudinal axis 163. In this state, the end face 128 is relaxed to its original planar shape. In Fig. 13, reference numeral 182 denotes the distance from the nadir of the concave flange face 126 to the original relaxed planar flange face 126. As indicated in Fig. 13, the greater the radial distance from the longitudinal axis 163, the smaller the amount of concavity 182.

The amount of concavity 182 may range from about 0.01 mm to about 0.5 mm. In some embodiments, the amount of concavity 182 may range from about 0.01 % to about 1 % of the diameter of the pre-stressing screw 162. The amount of concavity 182 may be defined by the distance from the nadir of the concave flange face 126 to the original planar flange face 126.

In some embodiments, the amount of convexity 180 of the convex flange face 126 before machining may be substantially equal to the amount of concavity 182 of the concave flange face 126 after machining. That is, the distance from the apex of the convex surface 126 to the original planar flange face 126 is substantially equal to the distance from the nadir of the concave flange face 126 to the original planar flange face 126.

In some embodiments, the pre-stressing torque of the pre-stressing screw 162 is substantially equal to the mounting torque of the at least one mounting screw 140. In some embodiments, the pre-stressing torque of the pre-stressing screw 162 is in a range from about 50 % to about 200 %, particularly in a range from about 80 % to about 120 % of the mounting torqze of the at least one mounting screw 140. For example, the mounting torque of the at least one mounting screw 162 may be in a range from about 80 Nm to about 250 Nm.

After removing the pre-stressing screw 162 from the apparatus 160 and relaxing the damping element 120, thereby providing the concave flange face 126, pre-forming of the damping element 120 is finished.

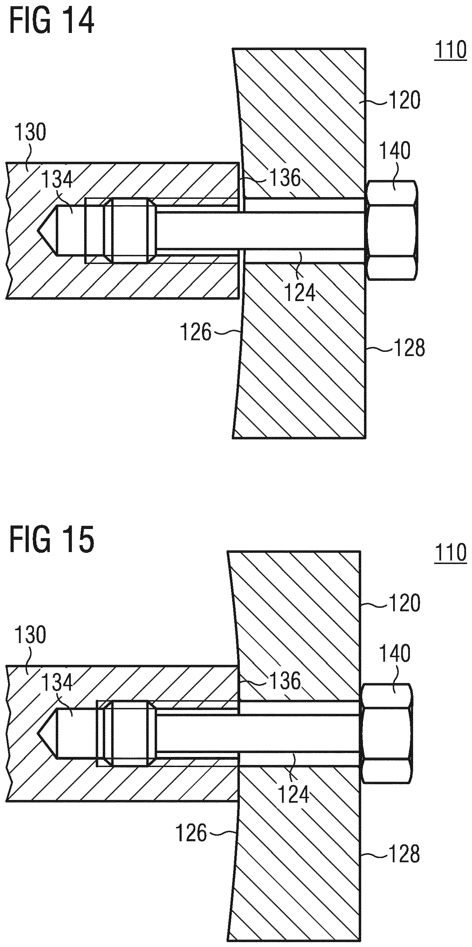

Referring to Fig. 14, after pre-forming the damping element 120, the damping element 120 is mounted to the end face 136 of the crankshaft 130 via at least one mounting screw 140. In Fig. 14, the flange faces 126, 136 face each other. Then, the mounting screw 140 is inserted through the through hole 124 and is threadably engaged with the tapped blind hole 124. In the position shown in Fig. 14, the mounting screw 140 is in a non-tightened state.

While tightening the mounting screw 140, the amount of concavity 182 of the flange face 126 gets continually smaller. When the mounting screw 140 is tightened to a predetermined and desired mounting torque, the flange face 126 is planar again, at least in the portion where the flange face 136 is congruent with the flange face 126. That is, the flange face 126 is in planar contact with the flange face 136, which is illustrated in Fig. 15.

In Fig. 15, the pressure at the flange faces 126, 136 is uniformly and does not decrease in relation to the distance to the screw. This may prevent any relative movement between the crankshaft 130 and the damping element 120.

### Industrial Applicability

The above-mentioned method for mounting two members to one another is applicable to any assembly, where two members are detachably connected to one another. For example, when connecting two members to one another via at least one screw, the at least partially elastically deformation is preferably applied to that member having a threaded bore. For instance, instead of preforming the connecting rod 20, it may be possible to apply the exemplary method disclosed herein to the connecting rod cap 30. In such case, the connecting rod cap 30 includes a tapped blind hole, wherein the connecting rod 20 includes a through hole.

In some embodiments, instead of providing a tapped blind hole, it may be possible to have a tapped through hole. In such embodiments, a supporting screw is screwed into the tapped through hole from a first end thereof. Then, the pre-stressing screw is screwed into the tapped through hole from a second end thereof. The pre-stressing screw may then contact the end of the supporting screw, which works as a bottom portion of a blind hole. When tightening the pre-stressing screw, the member provided with the tapped through hole may be at least partially elastically deformed.

In some embodiments, elastically deformation may be applied to the member having a non-tapped through hole. In such embodiments, a tensioning device may be inserted into the non-tapped through hole. The tensioning device may be hydraulically actuatable such that the tensioning device may at least partially lock within the non-tapped through hole, thereby at least partially elastically deforming the corresponding member.

The exemplary method disclosed herein is also applicable to any existing assemblies where two members are connected to one another via at least one screw. In such case, existing assemblies can be retrofitted with such preforming method. For example, a connecting rod of an already existing connecting rod assembly can be preformed as described and disclosed herein.

Although the preferred embodiments of this invention have been described herein, improvements and modifications may be incorporated without departing from the scope of the following claims.

## Claims

1. A method for mounting a first member (20; 120) having a first flange face (26; 126) to a second member (30; 130) having a second flange face (36; 136) via at least one mounting screw (40; 140), the method comprising:
at least partially elastically deforming the first member (20; 120) at the first flange face (26; 126);
machining the first flange face (26; 126) while maintaining the first member (20; 120) at least partially elastically deformed;
after machining the first flange face (26; 126) of the first member (20; 120), relaxing the first member (20; 120); and
mounting the first member (20; 120) to the second member (30; 130) via the at least one mounting screw (40; 140) by tightening the at least one mounting screw (40; 140), preferably by tightening the at least one mounting screw (40; 140) with a predetermined torque.

2. The method of claim 1, wherein the step of at least partially elastically deforming the first member (20; 120) includes at least partially elastically deforming the first flange face (26; 126) to an at least partially convex shape.

3. The method of any one of the preceding claims, wherein the step of machining the first flange face (26; 126) includes flattening the first flange face (26; 126), preferably by at least one of milling, grinding, honing, lapping, and facing off.

4. The method of any one of the preceding claims, wherein, after relaxing the first member (20; 120), the first flange face (26; 126) has an at least partially concave shape.

5. The method of any one of the preceding claims, wherein the amount of convexity (80; 180) of the first flange face (26; 126) after at least partially elastically deforming the first member (20; 120) is substantially equal to the amount of concavity (82; 182) of the first flange face (26; 126) after relaxing the first member (20; 120).

6. The method of any one of the preceding claims, wherein the amount of convexity (80; 182) of the first flange face (26; 126) after at least partially elastically deforming the first member (20; 120) and the amount of concavity (82; 182) of the first flange face (26; 126) after relaxing the first member (20; 120) are in a range from about 0.01 mm to about 0.5 mm.

7. The method of any one of the preceding claims, wherein the first member is a connecting rod (20) and the second member is a connecting rod cap (30) of a connecting rod assembly (10) configured to be connected to a crankshaft of an internal combustion engine.

8. The method of claim 7, wherein
the connecting rod (20) includes at least one tapped blind hole (24) opening at the first flange face (26),
the connecting rod cap (30) includes at least one through hole (34) opening at the second flange face (36), and
the step of at least partially elastically deforming the first member (20) includes inserting a pre-stressing screw (60) into the at least one tapped blind hole (24) and tightening the pre-stressing screw (60) with a predetermined pre-stressing torque.

9. The method of claim 8, wherein the pre-stressing torque for tightening the pre-stressing screw (60) is in a range from about 50 % to about 200 %, particularly from about 80 % to about 120 %, of the mounting torque for tightening the at least one mounting screw (40).

10. The method of any one of claims 1 to 6, wherein the first member is a damping element (120) and the second member is a crankshaft (130) of an internal combustion engine, the damping element (120) being configured to be connected to an end face (136) of the crankshaft (130).

11. The method of claim 10, wherein the damping element (120) is at least partially elastically deformed by exerting an axial force to a central portion of an end face (128) opposite to the first flange face (126).

12. The method of any of claims 10 or 11, wherein the force exerted onto the end face (128) opposite to the first flange face (126) is generated by tightening a pre-stressing screw (140) pressing against the central portion of the end face (128) opposite to the first flange face (126).

13. A screw connection (10; 110) comprising:
a first member (20; 120) having at least one first flange face (26; 126);
a second member (30; 130) having at least one second flange face (36; 136) and configured to be connected to the first member (20; 120); and
at least one mounting screw (40; 140) configured to mount the first member (20;120) to the second member (30;130) at the first and second flange faces (26, 36; 126, 136),
wherein at least one of the first flange face (26; 126) and the second flange face (36; 136) includes an at least partially concave shape in a non-tightened state of the at least one mounting screw (40; 140), and a substantially planar shape in a tightened state of the at least one mounting screw (40; 140).

14. The screw connection (10) of claim 13, wherein
the first member is a connecting rod (20) of an internal combustion engine, and
the second member is a connecting rod cap (30) configured to be mounted to the connecting rod (20) at the first and second flange faces (26, 36) via the at least one mounting screw (40).

15. The screw connection (110) of claim 13, wherein
the first member is a crankshaft (130) having at least one flange face (136) at an end face thereof, and
the second member is a damping element (120) having at least one flange face (126) and configured to be connected to the flange face (136) of the crankshaft (130) via the at least one mounting screw (140).

## Patentansprüche

1. Verfahren zum Montieren eines ersten Elements (20; 120) mit einer ersten Flanschfläche (26; 126) an einem zweiten Element (30; 130) mit einer zweiten Flanschfläche (36; 136) mittels zumindest einer Montageschraube (40; 140), das Verfahren umfassend:
zumindest teilweise elastisches Verformen des ersten Elements (20; 120) an der ersten Flanschfläche (26; 126);
maschinelles Bearbeiten der ersten Flanschfläche (26; 126), während das erste Element (20; 120) zumindest teilweise elastisch verformt gehalten wird;
nach dem maschinellen Bearbeiten der ersten Flanschfläche (26; 126) des ersten Elements (20; 120), Entspannen des ersten Elements (20; 120); und
Montieren des ersten Elements (20; 120) an dem zweiten Element (30; 130) mittels der zumindest einen Montageschraube (40; 140) durch Festziehen der zumindest einen Montageschraube (40; 140), vorzugsweise durch Festziehen der zumindest einen Montageschraube (40; 140) mit einem vorbestimmten Drehmoment.

2. Verfahren nach Anspruch 1, wobei der Schritt zum zumindest teilweisen elastischen Verformen des ersten Elements (20; 120) zumindest ein teilweises elastisches Verformen der ersten Flanschfläche (26; 126) zu einer zumindest teilweise konvexen Form enthält.

3. Verfahren nach einem der vorstehenden Ansprüche, wobei der Schritt zum maschinellen Bearbeiten der ersten Flanschfläche (26; 126) ein Abflachen der ersten Flanschfläche (26; 126), vorzugsweise durch zumindest eines von Fräsen, Schleifen, Honen, Läppen und Abheben enthält.

4. Verfahren nach einem der vorstehenden Ansprüche, wobei, nach Entspannen des ersten Elements (20; 120) die erste Flanschfläche (26; 126) eine zumindest teilweise konkave Form aufweist.

5. Verfahren nach einem der vorstehenden Ansprüche, wobei das Ausmaß an Konvexität (80; 180) der ersten Flanschfläche (26; 126) nach dem zumindest teilweisen elastischen Verformen des ersten Elements (20; 120) im Wesentlichen gleich dem Ausmaß an Konkavität (82; 182) der ersten Flanschfläche (26; 126) nach Entspannen des ersten Elements (20; 120) ist.

6. Verfahren nach einem der vorstehenden Ansprüche, wobei das Ausmaß an Konvexität (80; 182) der ersten Flanschfläche (26; 126) nach dem zumindest teilweisen elastischen Verformen des ersten Elements (20; 120) und das Ausmaß an Konkavität (82; 182) der ersten Flanschfläche (26; 126) nach Entspannen des ersten Elements (20; 120) im Bereich von etwa 0,01 mm bis etwa 0,5 mm sind.

7. Verfahren nach einem der vorstehenden Ansprüche, wobei das erste Element eine Verbindungsstange (20) ist und das zweite Element eine Verbindungsstangenkappe (30) einer Verbindungsstangenanordnung (10) ist, die gestaltet ist, um mit einer Kurbelwelle eines Verbrennungsmotors verbunden zu werden.

8. Verfahren nach Anspruch 7, wobei
die Verbindungsstange (20) zumindest ein Sackloch mit Gewinde (24) enthält, das sich an der ersten Flanschfläche (26) öffnet,
die Verbindungsstangenkappe (30) zumindest ein Durchgangsloch (34) enthält, das sich an der zweiten Flanschfläche (36) öffnet, und
der Schritt zum zumindest teilweisen elastischen Verformen des ersten Elements (20) ein Einführen einer Vorspannungsschraube (60) in das zumindest eine Sackloch mit Gewinde (24) und Festziehen der Vorspannungsschraube (60) mit einem vorbestimmten Drehmoment enthält.

9. Verfahren nach Anspruch 8, wobei das Vorspanndrehmoment zum Festspannen der Vorspannungsschraube (60) in einem Bereich von etwa 50 % bis etwa 200 %, insbesondere von etwa 80 % bis etwa 120 % des Montagedrehmoments zum Festziehen der zumindest einen Montageschraube (40) liegt.

10. Verfahren nach einem der Ansprüche 1 bis 6, wobei das erste Element ein Dämpfungselement (120) ist und das zweite Element eine Kurbelwelle (130) eines Verbrennungsmotors ist, wobei das Dämpfungselement (120) gestaltet ist, um mit einer Stirnfläche (136) der Kurbelwelle (130) verbunden zu sein.

11. Verfahren nach Anspruch 10, wobei das Dämpfungselement (120) durch Ausüben einer Axialkraft auf einen zentralen Abschnitt einer Stirnfläche (128) gegenüber der ersten Flanschfläche (126) zumindest teilweise elastisch verformt wird.

12. Verfahren nach einem der Ansprüche 10 oder 11, wobei die Kraft, die auf die Stirnfläche (128) gegenüber der ersten Flanschfläche (126) ausgeübt wird, durch Festziehen einer Vorspannungsschraube (140) erzeugt wird, die gegen den zentralen Abschnitt der Stirnfläche (128) gegenüber der ersten Flanschfläche (126) presst.

13. Schraubverbindung (10; 110), umfassend:
ein erstes Element (20; 120) mit zumindest einer ersten Flanschfläche (26; 126);
ein zweites Element (30; 130) mit zumindest einer zweiten Flanschfläche (36; 136) und gestaltet, um mit dem ersten Element (20; 120) verbunden zu werden; und
zumindest eine Montageschraube (40; 140), die gestaltet ist, um das erste Element (20;120) am zweiten Element (30;130) an der ersten und zweiten Flanschfläche (26, 36; 126, 136) zu montieren,
wobei zumindest eine der einer ersten Flanschfläche (26; 126) und der zweiten Flanschfläche (36; 136) eine zumindest teilweise konkave Form in einem nicht festgezogenen Zustand der zumindest einen Montageschraube (40; 140) und eine im Wesentlichen ebene Form in einem festgezogenen Zustand der zumindest einen Montageschraube (40; 140) enthält.

14. Schraubverbindung (10) nach Anspruch 13, wobei
das erste Element eine Verbindungsstange (20) eines Verbrennungsmotors ist und das zweite Element eine Verbindungsstangenkappe (30) ist, die gestaltet ist, um an der Verbindungsstange (20) an der ersten und zweiten Flanschfläche (26, 36) über die zumindest eine Montageschraube (40) verbunden zu werden.

15. Schraubverbindung (110) nach Anspruch 13, wobei
das erste Element eine Kurbelwelle (130) mit zumindest einer Flanschfläche (136) an einer Stirnfläche davon ist, und
das zweite Element ein Dämpfungselement (120) mit zumindest einer Flanschfläche (126) ist und gestaltet ist, um mit der Flanschfläche (136) der Kurbelwelle (130) über die zumindest eine Montageschraube (140) verbunden zu werden.

## Revendications

1. Procédé pour monter un premier élément (20 ; 120) ayant une première face de bride (26 ; 126) à un second élément (30 ; 130) présentant une seconde face de bride (36 ;136) par le biais d'au moins une vis de fixation (40; 140), le procédé comprenant :
au moins la déformation partielle élastique du premier élément (20 ;120) sur une première face de bride (26 ;126) ;
l'usinage de la première face de bride (26 ;126) tout en maintenant le premier élément (20 ; 120) au moins partiellement élastiquement déformé ;
après usinage de la première face de bride (26 ;126) du premier élément (20 ;120), l'assouplissement du premier élément (20 ;120) ; et
la fixation du premier élément (20 ;120) sur le second élément (30 ;130) par le biais de ladite au moins une vis de fixation (40 ;140) en serrant ladite au moins une vis de fixation (40 ;140), de préférence en serrant ladite au moins une vis de fixation (40 ;140) à un couple prédéterminé.

2. Procédé selon la revendication 1, dans lequel l'étape de déformation élastique au moins partielle du premier élément (20 ;120) inclut une déformation élastique au moins partielle de la première face de bride (26 ;126) en une forme au moins partiellement convexe.

3. Procédé selon l'une quelconque des revendications précédentes, dans lequel l'étape d'usinage de la première face de bride (26 ;126) inclut l'aplatissement de la première face de bride (26 ;126), de préférence par au moins une étape de broyage, meulage, affûtage, rodage et dépose de revêtement.

4. Procédé selon l'une quelconque des revendications précédentes, dans lequel, après avoir assoupli le premier élément (20 ;120), la première face de bride (26, ;126) a une forme au moins partiellement concave.

5. Procédé selon l'une quelconque des revendications précédentes, dans lequel l'ampleur de la convexité (80 ;180) de la première face de bride (26 ;126) après une déformation élastique au moins partielle du premier élément (20 ;120) est sensiblement égale à l'ampleur de la concavité (82 ;182) de la première face de bride (26 ;126) après assouplissement du premier élément (20 ;120).

6. Procédé selon l'une quelconque des revendications précédentes, dans lequel l'ampleur de la convexité (80 ;182) de la première face de bride (26 ;126) après une déformation élastique au moins partielle du premier élément (20 ;120) et l'ampleur de la concavité (82 ;182) de la première face de bride (26 ;126) après un assouplissement du premier élément (20 ;120) sont dans une plage d'environ 0,01 mm à environ 0,5 mm.

7. Procédé selon l'une quelconque des revendications précédentes, dans lequel le premier élément est une bielle (20) et le second élément est un chapeau de bielle (30) d'un ensemble de bielles (10) configuré pour être raccordé à un vilebrequin d'un moteur à combustion interne.

8. Procédé selon la revendication 7, dans lequel
la bielle (20) inclut au moins un trou borgne taraudé (24) s'ouvrant sur la première face de bride (26),
le chapeau de bielle (30) inclut au moins un orifice passant (34) s'ouvrant sur la seconde face de bride (36), et
l'étape consistant à déformer élastiquement au moins partiellement le premier élément (20) inclut l'insertion d'une vis de précontrainte (60) dans ledit au moins un trou borgne taraudé (24) et à serrer la vis de précontrainte (60) à un couple de précontrainte prédéterminé.

9. Procédé selon la revendication 8, dans lequel le couple de précontrainte pour serrer la vis de précontrainte (60) est dans une plage d'environ 50% à environ 200%, en particulier d'environ 80% à environ 120% du couple de fixation pour serrer ladite au moins une vis de fixation (40).

10. Procédé selon l'une quelconque des revendications 1 à 6, dans lequel le premier élément est un élément d'amortissement (120) et le second élément est un vilebrequin (130) d'un moteur à combustion interne, l'élément d'amortissement (120) étant configuré pour être raccordé à une face d'extrémité (136) du vilebrequin (130).

11. Procédé selon la revendication 10, dans lequel l'élément d'amortissement (120) est au moins partiellement élastiquement déformé en exerçant une force axiale sur une partie centrale d'une face d'extrémité (128) opposée à la première face de bride (126).

12. Procédé selon l'une quelconque des revendications 10 ou 11, dans lequel la force exercée sur la face d'extrémité (128) opposée à la première face de bride (126) est générée en serrant une vis de précontrainte (140) par une pression contre la partie centrale de la face d'extrémité (128) opposée à la première face de bride (126).

13. Raccordement à vis (10 ;110) comprenant :
un premier élément (20 ;120) ayant au moins une première face de bride (26 ;126) ;
un second élément (30 ;130) ayant au moins une seconde face de bride (36 ;136) et configuré pour être raccordé au premier élément (20 ;120) et
au moins une vis de fixation (40 ;140) configurée pour fixer le premier élément (20 ;120) sur le second élément (30 ;130) sur les première et seconde faces de bride (26, 36;126,136),
dans lequel au moins une parmi la première face de bride (26 ;126) et la seconde face de bride (36 ;136) inclut une forme au moins partiellement concave dans un état non-serré de ladite au moins une vis de fixation (40 ;140) et une forme sensiblement plane dans un état serré de ladite au moins une vis de fixation (40 ;140).

14. Raccordement à vis (10) selon la revendication 13, dans lequel
le premier élément est une bielle (20) d'un moteur à combustion interne, et
le second élément est un chapeau de bielle (30) configuré pour être monté sur la bielle(20) sur la première et la seconde faces de bride (26, 36) via ladite au moins une vis de fixation (40).

15. Raccordement à vis (110) selon la revendication 13, dans lequel
le premier élément est un vilebrequin (130) ayant au moins une face de bride (136) sur une face d'extrémité correspondante, et
le second élément est un élément d'amortissement (120) ayant au moins une face de bride (126) et configuré pour être raccordé à la face de bride (136) du vilebrequin ('130) via ladite au moins une vis de fixation (140).
